(19) Europäisches Patentamt
European Patent Office
Office européen des brevets

(11) **EP 1 570 325 B1**

(12) **FASCICULE DE BREVET EUROPEEN**

(45) Date de publication et mention
de la délivrance du brevet:
**06.09.2006 Bulletin 2006/36**

(21) Numéro de dépôt: **03799528.9**

(22) Date de dépôt: **02.12.2003**

(51) Int Cl.:
***G05D 1/00*** **(2006.01)**

(86) Numéro de dépôt international:
**PCT/EP2003/050920**

(87) Numéro de publication internationale:
**WO 2004/053611 (24.06.2004 Gazette 2004/26)**

(54) **PROCEDE DE VALIDATION D'UNE CONTRAINTE DE PLAN DE VOL**

VERFAHREN ZUR VALIDIERUNG EINER FLUGPLANEINSCHRÄNKUNG

METHOD OF VALIDATING A FLIGHT PLAN CONSTRAINT

(84) Etats contractants désignés:
**DE FR GB**

(30) Priorité: **06.12.2002 FR 0215481**

(43) Date de publication de la demande:
**07.09.2005 Bulletin 2005/36**

(73) Titulaire: **Thales**
**92200 Neuilly Sur Seine (FR)**

(72) Inventeur: **CHARLES, Loic**
**Thales Intellectual Property**
**F-94117 Arcueil Cedex (FR)**

(74) Mandataire: **Beylot, Jacques**
**Marks & Clerk France**
**31-33 Avenue Aristide Briand**
**94117 Arcueil Cédex (FR)**

(56) Documents cités:
**US-A- 4 811 230** **US-A- 5 797 106**

**Description**

La présente invention concerne le suivi automatique d'un plan de vol par un calculateur de gestion du vol équipant un aérodyne et plus particulièrement le respect, par ce calculateur de gestion du vol, d'une contrainte en un point imposé de passage proche de la position de l'aérodyne au moment de la mise en route du suivi automatique du plan de vol.

Les aérodynes actuels présentent trois niveaux d'équipements de pilotage :

- un premier niveau d'équipements constitué des commandes de vol agissant directement sur les gouvernes et les moteurs,
- un deuxième niveau d'équipements constitué du pilote automatique et/ou du directeur de vol agissant sur les commandes de vol, directement pour le pilote automatique ou par l'intermédiaire du pilote pour le directeur de vol, pour asservir l'aérodyne sur un paramètre de vol tel que par exemple, cap, roulis, tangage, altitude, vitesse, etc ..., et
- un troisième niveau d'équipements constitué du calculateur de gestion du vol connu sous le sigle FMS tiré de l'expression anglo-saxonne "Flight Management System" capable d'élaborer un plan de vol et d'agir sur le pilote automatique ou le directeur de vol pour le faire suivre par l'aérodyne.

Le calculateur de gestion du vol FMS, appelé dans la suite calculateur de vol FMS, a, entre autres fonctions principales, : l'élaboration et le suivi automatique d'un plan de vol, un plan de vol étant constitué des trajectoires latérale et verticale que doit emprunter l'aérodyne pour aller de la position qu'il occupe à sa destination, ainsi que des vitesses de parcours de ces trajectoires.

L'élaboration d'un plan de vol se fait entre autre, à partir de points imposés de passage associés à des contraintes d'altitude et de vitesse. Ces points imposés de passage et leurs contraintes associées sont introduits, dans le calculateur de vol FMS, par l'équipage de l'aérodyne, au moyen d'un équipement du poste de pilotage à clavier et écran assurant l'interface homme-machine tel que celui connu sous la dénomination MCDU provenant de l'anglo-saxon : « Multipurpose Control and Display Unit ». L'élaboration proprement dite consiste à construire les trajectoires latérale et verticale du plan de vol à partir d'un enchaînement de segments de droite partant d'un point de départ, passant par les points imposés de passage et aboutissant à un point d'arrivée, en respectant des règles normalisées de construction et en tenant compte de contraintes d'altitude et de vitesse associées à chaque point imposé de passage.

Le suivi automatique d'un plan de vol consiste à détecter, en cours de mission, les écarts de l'aérodyne par rapport au plan de vol préétabli et à donner au pilote automatique ou au directeur de vol les consignes de vol permettant de corriger ces écarts, de façon à les maintenir dans des limites étroites. Pour évaluer les écarts par rapport au plan de vol, le calculateur de vol FMS utilise la position de l'aérodyne mesurée périodiquement par les capteurs de bord, plus précisément, ses projections sur les trajectoires latérale et verticale du plan de vol et des prévisions de trajectoires verticale et horizontale faites en ignorant les phases de transition, l'ignorance des phases de transition se justifiant par le fait que le temps caractéristique de réponse d'un calculateur de vol FMS est nettement inférieur au transitoire avion. Une fois en possession de ces écarts, le calculateur de vol FMS se sert de deux lois d'acquisition et de tenues des trajectoires horizontale et verticale, implantées en son sein et couramment appelées lois « Hpath » et « Vpath », provenant respectivement de l'anglo-saxon « Horizontal Path » et « Vertical Path » pour engendrer, à partir des écarts évalués, des consignes d'altitude et de vitesse transmises au pilote automatique ou au directeur de vol afin de respecter les contraintes de plan de vol entrées par l'équipage de l'aérodyne.

A la mise en route d'une fonction de suivi automatique de plan de vol, un calculateur de vol FMS prend le contrôle du pilote automatique et du directeur de vol en leur donnant de nouvelles consignes de vol conformes au plan de vol. Cet instant de mise en route de la fonction de suivi automatique de plan de vol d'un calculateur de vol FMS peut se produire alors que l'aérodyne est très proche d'un point imposé de passage obligeant le calculateur de vol FMS, à valider immédiatement les contraintes à ce point imposé de passage alors que l'aérodyne est sur une trajectoire de transition qui correspond au passage, des consignes de vol prévalant avant la mise en route de la fonction de suivi automatique de plan de vol, aux nouvelles consignes de vol données par le calculateur de vol FMS entamant le suivi automatique de plan de vol et qui n'est pas prise en compte par le calculateur de vol FMS.

Ce mode opératoire est satisfaisant dans la très grande majorité des situations de reprise d'une fonction de suivi automatique de plan de vol par un calculateur de vol FMS après une phase de vol pilotée car le pilote veille en général, à ce que l'aérodyne soit revenu dans une situation très proche de celle retenue dans son plan de vol avant de donner la main au calculateur FMS. Cependant, II peut arriver, dans certaines situations, que ce mode opératoire conduise le calculateur de vol FMS à négliger à tort une contrainte imposée au prochain point imposé de passage.

L'une de ces situations est celle d'une approche d'un aéroport en vue d'un atterrissage, alors que le calculateur de vol FMS reprend la main, après avoir été déconnecté momentanément par le pilote pour exécuter, par une action directe sur le pilote automatique ou le directeur de vol mis par exemple en mode sélecté de tenue d'une consigne de vitesse de descente d'urgence, une manoeuvre de passage à un niveau inférieur d'altitude non prévue dans le plan de vol mais demandée par l'autorité de contrôle aérien, alors que l'aéronef est à proximité d'un point imposé de passage où il doit respecter une altitude minimum imposée. Dans ce cas, plus la vitesse réelle de descente de l'aérodyne au moment de la mise en route du calculateur de vol FMS s'écarte de la vitesse de descente consignée dans le plan de vol, plus la prévision de trajectoire verticale faite par le calculateur de vol FMS pour valider la contrainte d'altitude s'éloigne, à court terme, de la réalité. L'erreur commise pouvant, au-delà d'un certain seuil, conduire le calculateur de vol FMS à considérer la contrainte d'altitude minimum naturellement respectée alors qu'il n'en est rien. La contrainte d'altitude peut être de type « AT » ou bien type « AT or ABOVE ». Ainsi on entend par contrainte d'altitude de type « AT » (respectivement « AT or ABOVE »), en un point de passage imposé, le fait que l'altitude de l'aérodyne doit être identique (respectivement supérieure ou égale) à une tolérance normalisée près, à la valeur de la contrainte d'altitude au point de passage imposé. Dans le cas d'une descente trop rapide, l'aérodyne n'étant pas autorisé à remonter, celui-ci est ainsi obligé de respecter un palier jusqu'au dépassement du point de passage imposé afin de satisfaire la contrainte d'altitude associé à ce point. Ceci se traduit par l'envoi d'une consigne d'altitude identique à la valeur de la contrainte au pilote automatique ou au directeur de vol, jusqu'au dépassement du point imposé de passage associé.

Le brevet US-A-4 811 230 décrit un système de pilotage automatique dans lequel des contraintes d'altitude, qui ne pourraient pas être respectées suite à une intervention manuelle du pilote, sont supprimées, conduisant à un nouveau calcul de la trajectoire verticale.

La présente invention a pour but d'améliorer le respect d'une contrainte en un point imposé de passage proche, par un calculateur de vol FMS reprenant un suivi automatique de plan de vol après une phase de vol piloté.

Elle a pour objet un procédé de validation d'une contrainte du plan de vol, en un point imposé de passage ou point contraint, pour un calculateur de vol FMS délivrant des consignes de vol à un aérodyne lors d'une reprise de suivi automatique de plan de vol après une phase de vol pilotée, consistant, pour la validation de ladite contrainte, à faire une prévision du déplacement à court terme de l'aérodyne jusqu'au point imposé de passage, tenant compte de la transition entre les mises en application par l'aérodyne des consignes de vol prévalant avant la reprise du suivi automatique de plan de vol et celles nouvellement fournies par le calculateur de vol FMS lors de cette même reprise, et à valider ladite contrainte au cas où elle ne serait pas respectée par l'aérodyne lorsqu'il parvient au point imposé de passage en suivant ladite prévision de déplacement, cela pour qu'elle reste prise en compte dans le suivi automatique ultérieur du plan de vol.

Avantageusement, la prévision de déplacement de l'aérodyne jusqu'au point imposé de passage, tenant compte de la transition entre les mises en application par l'aérodyne des consignes de vol prévalant avant la reprise du suivi automatique de plan de vol et celles nouvellement fournies par le calculateur de vol FMS lors de cette même reprise est faite selon un modèle de variation du premier ordre.

Avantageusement, lorsque la contrainte de plan de vol est une contrainte d'altitude, la prévision de déplacement de l'aérodyne jusqu'au point imposé de passage tenant compte de la transition entre les mises en application par l'aérodyne des consignes de vol prévalant avant la reprise du suivi automatique de plan de vol et celles nouvellement fournies par le calculateur de vol FMS lors de cette même reprise est limitée à une prévision de trajectoire verticale.

Avantageusement, la prévision de trajectoire verticale est faite en admettant que l'aérodyne a, lors de la transition de vitesse verticale entre sa valeur initiale $Vz_0$ avant le suivi automatique de plan de vol par le calculateur de vol FMS et sa valeur finale $Vz_f$ correspondant au plan de vol et imposée par le calculateur FMS, une vitesse sol "GrdSpd" constante et une vitesse verticale Vz suivant un modèle de variation du premier ordre répondant à la relation :

$$Vz = \left(Vz_0 - Vz_f\right)e^{\left(-t/\tau\right)} + Vz_f \qquad (1)$$

t étant la variable temps et $\tau$ une constante de temps caractéristique de l'aérodyne asservi par son pilote automatique ou son directeur de vol, selon une loi d'acquisition d'une consigne de vitesse verticale $Vz_f$.

Avantageusement, ladite validation d'une contrainte d'altitude consiste à :

-   estimer la date $t_{seq}$ de passage de l'aérodyne au point de passage contraint à partir de la distance $\Delta dist_0$ entre la position de l'aérodyne à la mise en route du suivi automatique du plan de vol et la position du point de passage contraint en supposant que l'aérodyne a une vitesse sol GrdSpd constante et en appliquant la relation :

$$t_{seq} = \frac{\Delta dist_0}{GrdSpd} \qquad (2)$$

- estimer la différence d'altitude $\Delta z_{seq}$ entre l'altitude prédite de l'aérodyne au point de passage contraint et la valeur de la contrainte d'altitude, en admettant que la vitesse verticale de l'aérodyne évolue, de sa valeur initiale $Vz_0$ avant le suivi automatique de plan de vol par le calculateur de vol FMS à sa valeur finale $Vz_f$ correspondant au plan de vol et imposée par le calculateur de vol FMS, en suivant un modèle de variation du premier ordre répondant à la relation :

$$\Delta z_{seq} = -\tau\left(Vz_0 - Vz_f\right)\left(1 - e^{\left(-t_{seq}/\tau\right)}\right) + Vz_f \cdot t_{seq} \qquad (3)$$

$\tau$ étant la constante de temps définie avec la relation (1), et

- valider la prise en compte de la contrainte d'altitude en cas de respect de l'inégalité :

$$\left|\Delta z_{seq}\right| > \left|\Delta z_0\right| - \Delta z_{m\,arg}$$

$\Delta z_{m\,arg}$ étant une marge d'altitude de sécurité .

Avantageusement, la valeur initiale $V_{z0}$ de la vitesse de descente de l'aérodyne au moment de la reprise du suivi automatique de plan de vol par le calculateur de vol FMS, prise en considération par le système de validation est donnée, au moment de la mise en route du suivi automatique de plan de vol, par des capteurs de vitesse verticale équipant l'aérodyne.

D'autres caractéristiques et avantages de l'invention ressortiront de la description ci-après d'un mode de réalisation de l'invention donné à titre d'exemple. Cette description sera faite en regard du dessin dans lequel :

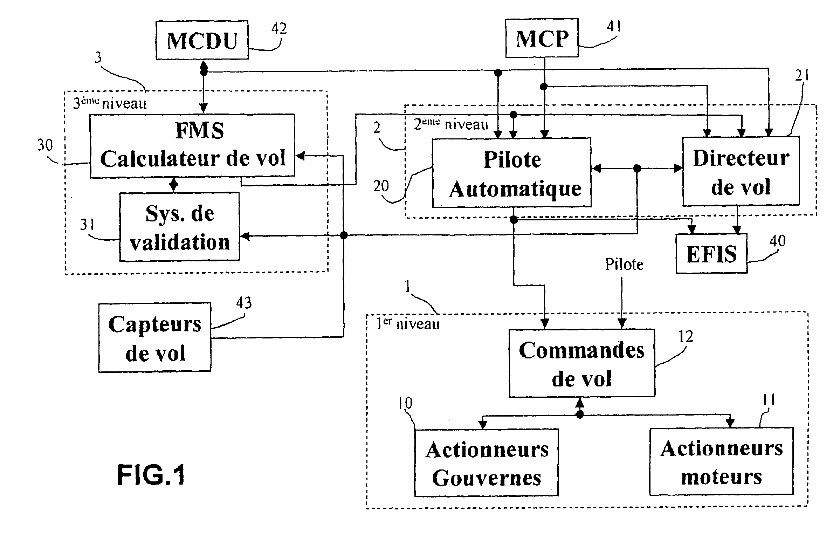

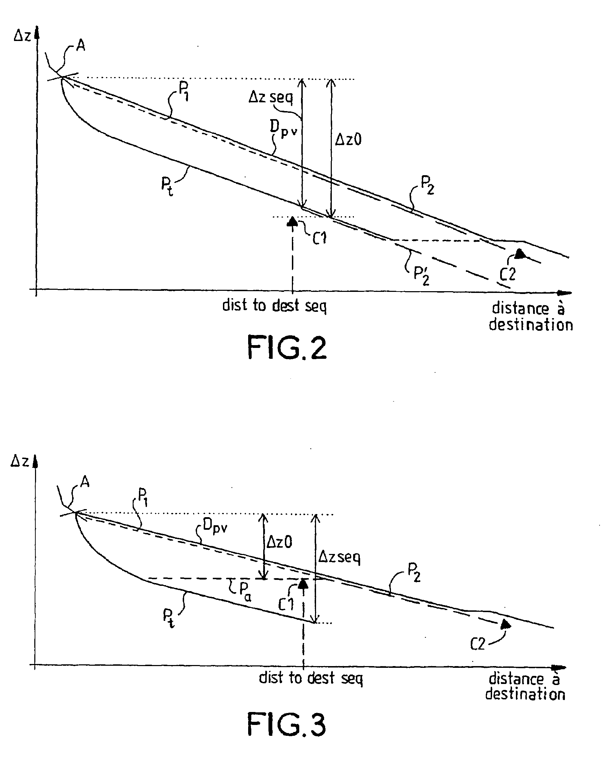

- une figure 1 montre l'organisation habituelle, en différentes couches, des équipements de pilotage d'un aérodyne et la localisation, au sein de ces équipements, d'un système de validation selon l'invention,
- une figure 2 illustre un cas de reprise de suivi automatique de plan de vol n'entraînant pas, de la part d'un calculateur de vol FMS, de non respect d'une contrainte d'altitude en un point imposé de passage obligé proche, et
- une figure 3 illustre un cas de reprise de suivi automatique de plan de vol impliquant l'action d'un système de validation selon l'invention sur le calculateur de vol FMS pour l'obliger à respecter une contrainte d'altitude en un point imposé de passage proche.

Un aérodyne est piloté par l'intermédiaire de surfaces orientables : gouvernes et du régime du ou de ses moteurs. A cette fin, il comporte, comme représenté à la figure 1, des actionneurs 10, 11 de ses gouvernes et de ses moteurs recevant des consignes de position élaborées par des équipements 12 dits "commandes de vol" de manière à maintenir l'aéronef dans une attitude prescrite par le pilote ou par un équipement de pilotage automatique. Les équipements 12 de commande de vol ont un temps caractéristique de réponse court, de l'ordre de la seconde, et constituent, avec les actionneurs 10, 11, un premier niveau 1 d'équipements de pilotage.

Ces équipements de pilotage de premier niveau 1 suffisent à eux seuls pour piloter l'aérodyne. Cependant, ils sont très souvent complétés par un deuxième niveau 2 d'équipements constitué d'un pilote automatique 20 et d'un directeur de vol 21 qui facilitent grandement la tâche du pilote en automatisant le suivi de consignes de cap, d'altitude, de vitesse ou de vitesse verticale entre autre, l'un, le pilote automatique 20, par action directe sur les commandes de vol 12 et l'autre, le directeur de vol 21, en indiquant au pilote, par l'intermédiaire d'écrans de visualisation EFIS 40 (le sigle EFIS provenant de l'anglo-saxon :"Electronic Flight Instrument System"), les ordres à donner aux commandes de vol 12.

Toujours dans le but de faciliter la tâche du pilote, le pilote automatique 20 et le directeur de vol 21 sont souvent complétés par un calculateur de vol FMS 30 automatisant les tâches d'élaboration et de suivi du plan de vol par l'aérodyne. Le calculateur de vol FMS 30 est paramétrable par le pilote au moyen d'un l'interface homme-machine MCDU 42. Il constitue un troisième niveau 3 d'équipements de pilotage car il intervient sur le pilotage de l'aérodyne uniquement par l'intermédiaire du pilote automatique 20 ou du directeur de vol 21 constituant le deuxième niveau 2 d'équipements de pilotage. Pour cette raison, il doit se satisfaire, dans sa fonction de suivi d'un plan de vol préétabli, d'un temps caractéristique de réponse encore plus long que le pilote automatique et le directeur de vol, par exemple de l'ordre de la minute.

Le pilote automatique 20 et le directeur de vol 21 constituent souvent un seul et même équipement car ils remplissent les mêmes tâches, la seule différence étant la présence ou non du pilote dans la chaîne de transmission des ordres aux équipements 12 de commandes de vol. Ils sont accessibles du pilote par deux interfaces homme-machine, l'une 41 dite "MCP" (le sigle MCP provenant de l'anglo-saxon : Module Control Panel et l'autre 42 dite "MCDU". L'interface MCP 41 sélectionne directement et paramètre les modes de fonctionnements du pilote automatique et du directeur de vol : suivi de cap, d'altitude, de vitesse et de vitesse verticale etc .... L'interface MCDU 42 agit sur le pilote automatique 20 et/ou le directeur de vol 21 via le calculateur de vol FMS 30 qui établit, sélectionne et paramètre modes de fonctionnement et consignes de façon à asservir l'aérodyne sur une trajectoire 4D. Le pilote automatique 20 et le directeur de vol 21 intervenant toujours par l'intermédiaire des équipements 12 de commandes de vol, doivent avoir un temps caractéristique de réponse plus long que les équipements 12 de commandes de vol, par exemple de l'ordre de la dizaine de secondes.

Des capteurs de vol 43 tel qu'un altimètre barométrique ou un radioaltimètre, une centrale inertielle ou un récepteur de positionnement par satellites, des sondes de vitesse air, etc. fournissent à l'aérodyne des renseignements sur sa position, son attitude, son vecteur vitesse, son altitude, etc... qui sont exploités de manière plus ou moins fine par le pilote automatique 20, le directeur de vol 21 et le calculateur de vol FMS 30.

Comme indiqué précédemment, un plan de vol est constitué des trajectoires latérale et verticale que doit suivre l'aérodyne pour parvenir de la position qu'il occupe à son point de destination ainsi que de consignes de vitesse de parcours le long de ces trajectoires.

L'élaboration d'un plan de vol par un calculateur de vol FMS 30 s'appuie sur une succession de points imposés de passage avec des contraintes pouvant porter sur l'altitude, la vitesse, le temps, le cap d'approche et celui d'éloignement, certaines étant associées aux points imposés de passage et d'autres aux trajectoires de rejointes entre deux points imposés de passage. Ces points imposés de passages et les contraintes associées sont introduits dans le calculateur de vol FMS 30, en tant que paramètres, par exemple au moyen de l'interface MCDU 42.

Le suivi automatique, par un calculateur de vol FMS 30, d'un plan de vol élaboré au préalable, consiste à délivrer au pilote automatique ou au directeur de vol les consignes de cap, de roulis (loi Hpath), de tangage (loi Vpath), d'altitude, de vitesse permettant à l'aérodyne de suivre le plan de vol préétabli en corrigeant, si besoin, tout écart détecté et en veillant à ce que les contraintes du plan de vol soient respectées.

Lors d'une mise en route de sa fonction de suivi automatique d'un plan de vol préétabli, le calculateur de vol FMS 30 prend le contrôle du pilote automatique 20 et du directeur de vol 21en leur donnant de nouvelles consignes de vol conformes au plan de vol tout en ignorant la trajectoire de transition de l'aérodyne due au passage, des consignes de vol prévalant avant la mise en route de la fonction de suivi automatique de plan de vol, aux nouvelles consignes de vol données par le calculateur de vol FMS 30.

Ce mode opératoire faisant fi d'une partie plus ou moins importante de la trajectoire de transition parcourue par l'aérodyne à la mise en route d'un suivi automatique de plan de vol, présente l'inconvénient de rendre possible une erreur de validation d'une contrainte du plan de vol en un point imposé de passage proche de la position de l'aérodyne au moment de cette mise en route. Cela peut conduire le calculateur de vol FMS 30 à négliger une telle contrainte.

Comme indiqué précédemment, une situation dans laquelle un calculateur de vol FMS peut faire une erreur de validation d'une contrainte du plan de vol au moment de la mise en route de sa fonction automatique de suivi de plan de vol est celle d'une approche d'un aéroport en vue d'un atterrissage, alors que cette mise en route de la fonction de suivi automatique de plan de vol intervient après une phase de vol pilotée au cours de laquelle le pilote a pris le contrôle de l'aéronef pour exécuter une manoeuvre non prévue dans le plan de vol mais demandée par l'autorité de contrôle aérien, telle qu'une descente d'urgence à un niveau inférieure, et que l'aérodyne se trouve à proximité d'un point imposé de passage où il doit respecter une altitude minimum imposée.

Dans ce cas, le calculateur de vol FMS 30 valide la contrainte d'altitude à partir d'une prévision de l'altitude prise par l'aéronef au point imposé de passage faite à partir d'une prévision de déplacement vertical, à court terme de l'aérodyne basée sur des consignes de vol correspondant à un suivi sans écart du plan de vol. Cette prévision de déplacement vertical à court terme est faussée au départ, par le fait qu'elle ne tient pas compte du déplacement vertical de l'aérodyne pendant la période de transition nécessaire au passage, de l'exécution des consignes de vol prévalant avant la mise en route du suivi automatique de plan de vol, à l'exécution des nouvelles consignes de vol du début de suivi automatique de plan de vol. Si le prochain point imposé de passage est suffisamment proche, l'erreur faite sur la prévision de déplacement vertical, à court terme, de l'aérodyne peut rendre l'estimation de l'altitude de l'aérodyne au point imposé de passage fausse au point de faire que le calculateur de vol FMS se trompe, considère la contrainte d'altitude comme naturellement respectée et la néglige alors qu'il devrait en tenir compte ultérieurement après avoir estimé les écarts de l'aérodyne par rapport au plan de vol.

Les figures 2 et 3 illustrent les deux cas qu'il est possible de rencontrer dans cette situation, la figure 2 montrant le cas où le prochain point imposé de passage est suffisamment éloigné pour que le déplacement de transition nécessaire à l'aérodyne pour appliquer les nouvelles consignes de vol provenant du calculateur de vol FMS ne fausse pas la prévision de trajectoire au point de perturber l'opération de validation de la première contrainte d'altitude rencontrée et la figure 3 le cas inverse.

Les figures 2 et 3 sont des diagrammes de trajectoires verticales en deux dimensions : distance à destination en abscisse et altitude en ordonnée. Ces diagrammes montrent la trajectoire verticale de descente Dpv, prévue dans le plan de vol, que devrait suivre l'aérodyne A à partir du moment de la mise en route de la fonction de suivi automatique de suivi de plan de vol de son calculateur de vol. Cette trajectoire verticale de descente Dpv respecte deux contraintes d'altitude C1, C2 en deux points successifs de passage imposé.

Lorsque l'aérodyne A entame cette trajectoire verticale de descente Dpv alors qu'il est depuis un certain temps sous le contrôle de la fonction de suivi automatique de plan de vol de son calculateur de vol FMS 30, il l'aborde sans écart notable, en suivant les consignes de vol élaborées par son calculateur de vol FMS 30, lequel fait des prévisions fidèles, puisque faites à partir de consignes de vol qu'il a données et qui sont en cours d'exécution par le pilote automatique 20 ou le directeur de vol 21. Les prévisions de déplacement vertical, à court terme, faites par le calculateur de vol FMS 30 étant fidèles, les prévisions des altitudes de l'aérodyne aux points imposés de passage le sont également et les validations des contraintes au fur et à mesure qu'elles se profilent se réalisent sans problème.

Le calculateur de vol FMS 30 procède à une prévision de l'altitude que prendra l'aérodyne au point de passage contraint par C1 avec les consignes de vol en cours d'exécution. Cette prévision d'altitude est basée sur une prévision P1 du déplacement vertical de l'aérodyne, représentée en pointillés, qui est fiable car reproduisant la pente de descente prévue au plan de vol et effectivement suivie par l'aérodyne. Elle montre que l'aérodyne aura, avec les consignes de vol en cours d'application, une altitude au premier point imposé de passage supérieure à la première contrainte d'altitude C1. Le calculateur de vol FMS 30 considère alors la première contrainte d'altitude minimum C1 comme naturellement respectée et la néglige dans son suivi ultérieur du plan de vol. Cela se traduit par le fait que le calculateur de vol FMS 30 maintient la trajectoire de descente sans modification.

Lorsque le calculateur FMS 30 a séquencé le point contraint par la première contrainte d'altitude C1, il cherche à valider la deuxième contrainte d'altitude C2 et procède à une prévision de l'altitude que prendra l'aérodyne à ce deuxième point imposé de passage avec les consignes de vol en cours d'exécution. Cette prévision d'altitude est basée sur une prévision P2 du déplacement vertical de l'aéronef, représentée en tirets, qui est encore fiable car reproduisant la pente de descente prévue dans le plan de vol et effectivement suivie par l'aérodyne. Elle montre que l'aérodyne aura, avec les consignes de vol en cours d'application, au deuxième point imposé de passage, une altitude inférieure à la deuxième contrainte C2 d'altitude minimum. Le calculateur de vol FMS 30 considère alors que la deuxième contrainte d'altitude C2 ne sera pas naturellement respectée et en tient compte dans son suivi ultérieur du plan de vol. Cela se traduit par le fait que le calculateur de vol FMS impose, à l'aérodyne, lorsqu'il arrive à l'altitude minimum de la deuxième contrainte C2, un palier horizontal jusqu'à ce qu'il ait franchi le deuxième point imposé de passage et qu'il puisse reprendre la pente de descente prévue dans le plan de vol.

Lorsque la fonction de suivi automatique de trajectoire du calculateur de vol FMS 30 est mise en route au moment où la première contrainte d'altitude C1 doit être validée, l'aérodyne est soumis à un déplacement transitoire provoqué par le passage de son pilote automatique 20 ou de son directeur de vol 21, de l'exécution des consignes de vol prévalant avant la mise en service de la fonction de suivi automatique de plan de vol, à l'exécution des nouvelles consignes de vol élaborées par cette fonction de suivi automatique, déplacement transitoire non pris en compte dans la prévision P1 de déplacement de l'aéronef qui est faite par le calculateur de vol FMS 30 pour la validation de cette première contrainte d'altitude C1 et qui est basée uniquement sur des consignes de vol adaptées à un aérodyne suivant le plan de vol. La non prise en compte de ce déplacement transitoire dans la prévision P1 du déplacement, à court terme, de l'aérodyne entraîne une erreur sur la prévision d'altitude, au premier point imposé de passage, qui augmente avec l'écart entre les consignes de vol en application avant et après la mise en route du suivi automatique de trajectoire et avec la proximité du premier point imposé de passage, et qui va jusqu'à pouvoir entraîner une erreur de validation de la première contrainte d'altitude C1, c'est-à-dire la non prise en compte de cette contrainte d'altitude alors que des consignes de vol adaptées au seul suivi de la trajectoire verticale du plan de vol ne permettent pas de la respecter.

Pour éviter cela, on propose d'ajouter au calculateur de vol (30 figure 1) un système particulier (31 figure 1) de validation de contrainte du plan de vol remplaçant, lors de la mise en route d'un suivi automatique de plan de vol, la prévision habituelle de déplacement P1 sur laquelle se base le calculateur de vol FMS 30 pour une opération de validation de contrainte, par une prévision de déplacement Pt de l'aérodyne tenant compte du déplacement transitoire induit par les changements de consignes de vol.

Dans le cas de la validation d'une contrainte d'altitude, la prévision de déplacement est limitée au plan vertical. Elle est faite en admettant que l'aérodyne a, lors de la transition de vitesse verticale entre sa valeur initiale $Vz_0$ avant le suivi automatique de plan de vol par le calculateur FMS et sa valeur finale $Vz_f$ correspondant au plan de vol et imposée par le calculateur de vol FMS 30, une vitesse sol "GrdSpd" constante et une vitesse verticale Vz suivant un modèle de variation du premier ordre répondant à la relation :

$$Vz = \left(Vz_0 - Vz_f\right)\ell^{\left(-t_{\cdot_f}\right)} + Vz_f \qquad (1)$$

t étant la variable temps et $\tau$ une constante caractéristique de l'aérodyne asservi par son pilote automatique ou son directeur de vol, selon une loi d'acquisition d'une consigne de vitesse verticale $Vz_f$.

Plus précisément, la validation d'une contrainte d'altitude minimum en un point imposé de passage consiste à :

- estimer la date $t_{seq}$ de passage de l'aérodyne au point contraint de passage à partir de la distance $\Delta dits_0$ entre la position de l'aérodyne à la mise en route du suivi automatique du plan de vol et la position du point contraint de passage en supposant que l'aérodyne a une vitesse sol GrdSpd constante et en appliquant la relation :

$$t_{seq} = \frac{\Delta dist_0}{GrdSpd} \qquad (2)$$

- estimer la différence d'altitude $\Delta z_{seq}$ entre l'altitude prédite de l'aérodyne au point contraint et la valeur de la contrainte d'altitude, en admettant que la vitesse verticale de l'aérodyne évolue, de sa valeur initiale $Vz_0$ avant le suivi automatique de plan de vol par le calculateur FMS à sa valeur finale $Vz_f$ correspondant au plan de vol et imposée par le calculateur FMS, en suivant un modèle de variation du premier ordre répondant à la relation (1). D'où il découle par intégration de la relation (1) :

$$\Delta z_{seq} = -\tau\left(Vz_0 - Vz_f\right)\left(1 - e^{\left(-t_{seq}/\tau\right)}\right) + Vz_f . t_{seq} \qquad (3)$$

$\tau$ étant la constante de temps définie avec la relation (1), et

- valider la prise en compte de la contrainte d'altitude en cas de respect de l'inégalité :

$$\left|\Delta z_{seq}\right| > \left|\Delta z_0\right| - \Delta z_{marg}$$

$\Delta z_{marg}$ étant une marge d'altitude de sécurité.

La valeur initiale $V_{z0}$ de la vitesse de descente de l'aérodyne au moment de la reprise du suivi automatique de plan de vol par le calculateur de vol FMS, prise en considération par le système de validation peut être mesurée par des capteurs de vitesse verticale équipant l'aérodyne.

Les figures 2 et 3 illustrent la nouvelle prévision de déplacement Pt obtenue dans le cas d'un aérodyne animé, à la mise en route de la fonction de suivi automatique de plan de vol, d'une vitesse de descente de 3.000 pieds/minute au lieu de la vitesse de descente de 1000 pieds/minute adoptée pour la trajectoire verticale Dpv du plan de vol.

Dans le cas de la figure 2, la mise en route de la fonction de suivi automatique de plan de vol se fait suffisamment en amont du premier point imposé de passage pour que l'altitude estimée de l'aérodyne à ce premier point de passage obligé, basée sur une prévision Pt de déplacement, à court terme, de l'aérodyne tenant compte de son déplacement de transition, satisfasse la contrainte d'altitude C1. La validation de la contrainte C1 et sa mise à l'écart faites par le calculateur de vol FMS 30 à partir de la prévision de déplacement P1 ne prenant pas en compte le déplacement transitoire impliqué par les changements de consignes de vol était donc fondée. Le déplacement transitoire de l'aérodyne lors de la mise en route de la fonction de suivi automatique de plan de vol fait que l'aérodyne ne suit pas, avec les consignes de vol délivrées par le calculateur de vol FMS, la trajectoire verticale Dpv prévue dans le plan de vol mais une trajectoire verticale proche de la prévision Pt. Il s'ensuit que lors de la validation de la deuxième contrainte C2 d'altitude, le calculateur de vol FMS estime l'altitude de l'aérodyne au deuxième point imposé de passage à l'aide de la prévision de déplacement P'2 et non P2 et que l'aérodyne entame plus précocement le palier horizontal à l'altitude minimum imposée par la deuxième contrainte C2.

Dans le cas de la figure 3, la mise en route de la fonction de suivi automatique de plan de vol se fait trop tardivement en amont du premier point imposé de passage pour que l'altitude estimée de l'aérodyne au prochain point de passage obligé satisfasse la contrainte d'altitude C1._La validation de la contrainte C1 et sa mise à l'écart faites par le calculateur de vol FMS 30 à partir d'une prévision de déplacement P1 ne prenant pas en compte le déplacement transitoire impliqué par les changements de consignes de vol n'était donc pas fondée et aurait conduit à un non respect de la contrainte d'altitude C1. Grâce au procédé de validation de contrainte proposé, cette erreur est évitée, la contrainte C1 reste considérée par le calculateur de vol FMS 30 qui provoque la mise en palier horizontal Pa de l'aérodyne dès qu'il atteint l'altitude minimum correspondant à la contrainte C1, cela jusqu'à ce qu'il ait franchi le premier point imposé de passage où il reprend la trajectoire du plan de vol.

Le système de validation qui a été proposé peut être réalisé par une nouvelle tâche logicielle confiée au calculateur déjà utilisé pour remplir les tâches du calculateur de vol FMS.

**Revendications**

1. Procédé de validation d'une contrainte (C1) de plan de vol, en un point imposé de passage, pour un calculateur de vol FMS (30) délivrant des consignes de vol à un aérodyne lors d'une reprise de suivi automatique de plan de vol après une phase de vol pilotée, consistant, pour une validation de ladite contrainte (C1) par le calculateur de vol FMS (30), à faire une prévision du déplacement de l'aérodyne jusqu'au point imposé de passage, tenant compte de la transition entre les mises en application par l'aérodyne des consignes de vol prévalant avant la reprise du suivi automatique de plan de vol et celles nouvellement fournies par le calculateur de vol FMS (30) lors de cette même reprise, et à valider ladite contrainte (C1) au cas où elle ne serait pas respectée par l'aérodyne s'il parvient au point imposé de passage en suivant ladite prévision de déplacement, cela pour qu'elle (C1) reste prise en compte dans le suivi automatique ultérieur du plan de vol.

2. Procédé selon la revendication 1, **caractérisé en ce que** la prévision de déplacement de l'aérodyne jusqu'au point imposé de passage, tenant compte de la transition entre les mises en application par l'aérodyne des consignes de vol prévalant avant la reprise du suivi automatique de plan de vol et celles nouvellement fournies par le calculateur de vol FMS (30) lors de cette même reprise est faite selon un modèle de variation du premier ordre.

3. Procédé selon la revendication 1, appliqué à la validation d'une contrainte d'altitude, **caractérisé en ce que** la prévision de déplacement de l'aérodyne jusqu'au point imposé de passage tenant compte de la transition entre les mises en application par l'aérodyne des consignes de vol prévalant avant la reprise du suivi automatique de plan de vol et celles nouvellement fournies par le calculateur de vol FMS (30) lors de cette même reprise est limitée à une prévision de trajectoire verticale.

4. Procédé selon la revendication 3, **caractérisé en ce que** la prévision de trajectoire verticale est faite en admettant que l'aérodyne a, lors de la transition de vitesse verticale entre sa valeur initiale $Vz_0$ avant le suivi automatique de plan de vol par le calculateur FMS (30) et sa valeur finale $Vz_f$ imposée par le calculateur de vol FMS (30), une vitesse sol "GrdSpd" constante et une vitesse verticale Vz suivant un modèle de variation du premier ordre répondant à la relation :

$$Vz = (Vz_0 - Vz_f)\, e^{(-t/\tau)} + Vz_f$$

t étant la variable temps et $\tau$ une constante caractéristique de l'aérodyne asservi par son pilote automatique ou son directeur de vol, selon une loi d'acquisition d'une consigne de vitesse verticale $Vz_f$.

5. Procédé selon la revendication 3, **caractérisé en ce qu'**il consiste à :

- estimer la date $t_{seq}$ de passage de l'aérodyne au point de passage contraint à partir de la distance $\Delta dist_0$ entre la position de l'aérodyne à la mise en route du suivi automatique du plan de vol et la position du point de passage contraint en supposant que l'aérodyne a une vitesse sol GrdSpd constante et en appliquant la relation :

$$t_{seq} = \frac{\Delta dist_0}{GrdSpd}$$

- estimer la différence d'altitude $\Delta z_{seq}$ de l'aérodyne entre l'altitude prédite au point de passage contraint et la valeur de la contrainte d'altitude, en admettant que la vitesse verticale de l'aérodyne évolue, de sa valeur initiale $Vz_0$ avant le suivi automatique de plan de vol par le calculateur de vol FMS (30) à sa valeur finale $Vz_f$ correspondant au plan de vol et imposée par le calculateur FMS(30), en suivant un modèle de variation du premier ordre répondant à la relation :

$$\Delta z_{seq} = -\tau(Vz_0 - Vz_f)\left(1 - e^{\left(-t_{seq}/\tau\right)}\right) + Vz_f . t_{seq}$$

$\tau$ étant une constante caractéristique de l'aérodyne asservi par son pilote automatique ou son directeur de vol, selon une loi d'acquisition d'une consigne de vitesse verticale $Vz_f$, et
- valider la prise en compte de la contrainte d'altitude en cas de respect de l'inégalité :

$$\left|\Delta z_{seq}\right| > \left|\Delta z_0\right| - \Delta z_{marg}$$

$\Delta z_{marg}$ étant une marge d'altitude de sécurité.

**6.** Procédé selon la revendication 4, **caractérisé en ce que** la valeur initiale $V_{z0}$ de la vitesse de descente de l'aérodyne au moment de la reprise du suivi automatique de plan de vol par le calculateur de vol FMS (30), prise en considération par le système de validation est mesurée, au moment de la mise en route du suivi automatique de plan de vol, par des capteurs (43) de vitesse verticale équipant l'aérodyne.

**Claims**

**1.** Method of validating a flight plan constraint (C1), at an imposed waypoint, for an FMS flight computer (30) delivering flight presets to an aerodyne during a resumption of automatic following of a flight plan after a piloted flight phase, consisting, for a validation of said constraint (C1) by the FMS flight computer (30), in making a forecast of the displacement of the aerodyne up to an imposed waypoint, taking account of the transition between the instances of application by the aerodyne of the flight presets prevailing before the resumption of the automatic following of the flight plan and those newly provided by the FMS flight computer (30) during this same resumption, and in validating said constraint (C1) in the case where it would not be complied with by the aerodyne if it reached the imposed waypoint by following said forecast of displacement, doing so in order that it (C1) remain taken into account in the subsequent automatic following of the flight plan.

**2.** Method according to Claim 1, **characterized in that** the forecast of displacement of the aerodyne up to the imposed waypoint, taking account of the transition between the instances of application by the aerodyne of the flight presets prevailing before the resumption of the automatic following of the flight plan and those newly provided by the FMS flight computer (30) during the same resumption is made according to a first order variation model.

**3.** Method according to Claim 1, applied to the validation of an altitude constraint, **characterized in that** the forecast of displacement of the aerodyne up to the imposed waypoint taking account of the transition between the instances of application by the aerodyne of the flight presets prevailing before the resumption of the automatic following of the flight plan and those newly provided by the FMS flight computer (30) during the same resumption is limited to a vertical trajectory forecast.

4. Method according to Claim 3, **characterized in that** the vertical trajectory forecast is made by assuming that the aerodyne has, during the vertical speed transition between its initial value $Vz_0$ before the automatic following of the flight plan by the FMS computer (30) and its final value $Vz_f$ imposed by the FMS flight computer (30), a constant ground speed "GrdSpd" and a vertical speed Vz according to a first order variation model complying with the relation:

$$Vz = \left(Vz_0 - Vz_f\right)e^{\left(-t/\tau\right)} + Vz_f$$

t being the time variable and $\tau$ a constant characteristic of the aerodyne steered by its automatic pilot or its flight director, according to a law of acquisition of a vertical speed preset $Vz_f$.

5. Method according to Claim 3, **characterized in that** it consists in:

- estimating the date $t_{seq}$ of passage of the aerodyne at the constrained waypoint on the basis of the distance $\Delta dist_0$ between the position of the aerodyne upon the instigation of the automatic following of the flight plan and the position of the constrained waypoint by assuming that the aerodyne has a constant ground speed GrdSpd and by applying the relation:

$$t_{seq} = \frac{\Delta dist_0}{GrdSpd}$$

- estimating the difference in altitude $\Delta z_{seq}$ of the aerodyne between the predicted altitude at the constrained waypoint and the value of the altitude constraint, by assuming that the vertical speed of the aerodyne changes, from its initial value $Vz_0$ before the automatic following of the flight plan by the FMS flight computer (30) to its final value $Vz_f$ corresponding to the flight plan and imposed by the FMS computer (30), by following a first order variation model complying with the relation:

$$\Delta z_{seq} = -\tau\left(Vz_0 - Vz_f\right)\left(1 - e^{\left(-t_{seq}/\tau\right)}\right) + Vz_f . t_{seq}$$

$\tau$ being a constant characteristic of the aerodyne steered by its automatic pilot or its flight director, according to a law of acquisition of a vertical speed preset $Vz_f$, and
- validating the taking into account of the altitude constraint in the case of compliance with the inequality:

$$\left|\Delta z_{seq}\right| > \left|\Delta z_0\right| - \Delta z_{marg}$$

$\Delta z_{marg}$ being a safety altitude margin.

6. Method according to Claim 4, **characterized in that** the initial value $V_{z0}$ of the speed of descent of the aerodyne at the moment of the resumption of the automatic following of the flight plan by the FMS flight computer (30), taken into consideration by the validation system, is measured, at the moment of the instigation of the automatic following of the flight plan, by vertical speed sensors (43) equipping the aerodyne.

**Patentansprüche**

1. Verfahren zur Validierung einer Flugplaneinschränkung (C1) an einem vorgeschriebenen Überflugpunkt für einen Flugrechner FMS (30), der einem Luftfahrzeug schwerer als Luft bei einer Wiederaufnahme der automatischen Kontrolle des Flugplans nach einer gesteuerten Flugphase Fluganweisungen erteilt, das darin besteht, für eine Validierung der Einschränkung (C1) durch den Flugrechner FMS (30) eine Vorausberechnung der Route des Luftfahrzeugs schwerer als Luft bis zum vorgeschriebenen Überflugpunkt anzustellen, unter Berücksichtigung des Übergangs zwischen der Inkraftsetzung der vor der Wiederaufnahme der automatischen Kontrolle des Flugplans geltenden Fluganweisungen durch das Luftfahrzeug schwerer als Luft und der derjenigen Fluganweisungen, die vom Flugrechner FMS (30) bei dieser Wiederaufnahme neu erteilt werden, sowie die Einschränkung (C1) in dem Fall zu validieren, in dem sie nicht vom Luftfahrzeug schwerer als Luft beachtet wird, falls es an den vorgeschriebenen Überflugpunkt gelangt, indem es der Vorausberechnung der Route folgt, und zwar damit sie (C1) bei der späteren automatischen Kontrolle des Flugplans weiterhin berücksichtigt wird.

2. Verfahren nach Anspruch 1, **dadurch gekennzeichnet, dass** die Vorausberechnung der Route des Luftfahrzeugs schwerer als Luft bis zu dem vorgeschriebenen Überflugpunkt, unter Berücksichtigung des Übergangs zwischen der Einführung der vor der Wiederaufnahme der automatischen Kontrolle des Flugplans geltenden Fluganweisungen durch das Luftfahrzeug schwerer als Luft und der derjenigen Fluganweisungen, die vom Flugrechner FMS (30) bei dieser Wiederaufnahme neu erteilt werden, nach einem erstrangigen Variationsmodell erfolgt.

3. Verfahren nach Anspruch 1, das bei der Validierung einer Höheneinschränkung angewandt wird, **dadurch gekennzeichnet, dass** die Vorausberechnung der Route des Luftfahrzeugs schwerer als Luft bis zu dem vorgeschriebenen Überflugpunkt, unter Berücksichtigung des Übergangs zwischen der Einführung der vor der Wiederaufnahme der automatischen Kontrolle des Flugplans geltenden Fluganweisungen durch das Luftfahrzeug schwerer als Luft und der derjenigen Fluganweisungen, die vom Flugrechner FMS (30) bei dieser Wiederaufnahme neu erteilt werden, auf eine Vorausberechnung des vertikalen Flugwegs beschränkt ist.

4. Verfahren nach Anspruch 3, **dadurch gekennzeichnet, dass** die Vorausberechnung des vertikalen Flugwegs derart erfolgt, dass angenommen wird, dass das Luftfahrzeug schwerer als Luft bei dem Übergang der vertikalen Geschwindigkeit zwischen seinem Ausgangswert $Vz_0$ vor der automatischen Kontrolle des Flugplans durch den Rechner FMS (30) und seinem Endwert $Vz_f$, der vom Flugrechner FMS (30) vorgeschrieben ist, eine konstante Bodengeschwindigkeit "GrdSpd" und eine vertikale Geschwindigkeit Vz aufweist gemäß einem erstrangigen Variationsmodell, das der folgenden Relation entspricht:

$$Vz = (Vz_0 - Vz_f)\, e^{(-t/\tau)} + Vz_f$$

wobei t die Variable Zeit und τ eine Konstante ist, die kennzeichnend ist für das Luftfahrzeug schwerer als Luft, das von seinem Autopiloten oder seiner Flugleitanlage gesteuert wird, gemäß einem Gesetz zum Erhalt einer Anweisung zur vertikalen Geschwindigkeit $Vz_f$.

5. Verfahren nach Anspruch 3, **dadurch gekennzeichnet, dass** es darin besteht:

- das Datum $t_{seq}$ des Überflugs des Luftfahrzeugs schwerer als Luft am erzwungenen Überflugpunkt ab der Entfernung $\Delta dist_0$ zwischen der Position des Luftfahrzeugs schwerer als Luft bei der Einschaltung der automatischen Kontrolle des Flugplans und der Position des erzwungenen Überflugpunkts zu schätzen, wobei angenommen wird, dass das Luftfahrzeug schwerer als Luft eine konstante Bodengeschwindigkeit GrdSpd aufweist und unter Anwendung folgender Relation:

$$t_{seq} = \frac{\Delta dist_0}{GrdSpd}$$

- den Höhenunterschied $\Delta z_{seq}$ des Luftfahrzeugs schwerer als Luft zwischen der vorausberechneten Höhe am erzwungenen Überflugpunkt und dem Wert der Höheneinschränkung zu schätzen, wobei angenommen wird, dass die vertikale Geschwindigkeit des Luftfahrzeugs schwerer als Luft sich von ihrem Ausgangswert $Vz_0$ vor der automatischen Kontrolle des Flugplans durch den Flugrechner FMS (30) zu ihrem Endwert $Vz_f$, der dem Flugplan entspricht und vom Rechner FMS (30) vorgeschrieben ist, hin entwickelt, wobei einem erstrangigen Variationsmodell gefolgt wird, das der folgenden Relation entspricht:

$$\Delta z_{seq} = -\tau (Vz_0 - Vz_f)\left(1 - e^{\left(-t_{seq}/\tau\right)}\right) + Vz_f . t_{seq}$$

wobei $\tau$ eine Konstante ist, die kennzeichnend ist für das Luftfahrzeug schwerer als Luft, das von seinem Autopiloten oder seiner Flugleitanlage gesteuert wird, gemäß einem Gesetz zum Erhalt einer Anweisung zur vertikalen Geschwindigkeit $Vz_f$ und

- die Berücksichtigung der Höheneinschränkung im Falle der Einhaltung der Ungleichheit zu validieren:

$$\left|\Delta z_{seq}\right| > \left|\Delta z_0\right| - \Delta z_{m\,arg}$$

wobei $\Delta z_{m\,arg}$ eine Höhensicherheitsmarge darstellt.

6. Verfahren nach Anspruch 4, **dadurch gekennzeichnet, dass** der Ausgangswert $Vz_0$ der Sinkgeschwindigkeit des Luftfahrzeugs schwerer als Luft zum Zeitpunkt der Wiederaufnahme der automatischen Kontrolle des Flugplans durch den Flugrechner FMS (30), die vom Validierungssystem berücksichtigt wird, zum Zeitpunkt der Einschaltung der automatischen Kontrolle des Flugplans durch vertikale Geschwindigkeitssensoren (43), mit denen das Luftfahrzeug schwerer als Luft ausgestattet ist, gemessen wird.

FIG.1

EP 1 570 325 B1

FIG.2

FIG.3